# EUROPEAN PATENT SPECIFICATION

(11) **EP 3 488 487 B1**
(45) Date of publication and mention of the grant of the patent: **31.03.2021**
(21) Application number: 17777671.3
(22) Date of filing: 31.08.2017
(51) Int. Cl.: H01M 10/663, H01M 10/6563, H01M 10/6557, H01M 10/627, H01M 10/6566, H01M 10/613

(54) **AIRFLOW COOLING FOR AN ENERGY STORAGE SYSTEM**
LUFTSTROMKÜHLUNG FÜR EIN ENERGIESPEICHERSYSTEM
FLUX D'AIR DE REFROIDISSEMENT POUR UN SYSTÈME DE STOCKAGE D'ÉNERGIE

(30) Priority: 31.08.2016 US 201615252354
(43) Date of publication of application: 29.05.2019
(73) Proprietor: General Electric Company, Schenectady, NY 12345 (US)
(72) Inventor: BROWELL, James, Thorpe, Schenectady, NY 12345 (US); ZANONI, Michael, Stanley, Schenectady, NY 12345 (US); AJDARI, Amin, Schenectady, NY 12345 (US); MANDIL, Ahmed, Schenectady, NY 12345 (US); CUTRIGHT, Richard, Hayes, Schenectady, NY 12345-6000 (US); RUSH, Kenneth, Mcclellan, Schenectady, NY 12345-6000 (US); HORGAN, Thomas, Joseph, Schenectady, NY 12345-6000 (US)
(74) Representative: Openshaw & Co.
(86) International application number: PCT/US2017/049539
(87) International publication number: WO 2018/045131

(56) References cited:
- DE-A1-102008 033 824
- US-A1- 2004 163 398
- US-A1- 2012 014 061
- US-A1- 2013 327 581
- US-A1- 2015 214 521

## Description

### FIELD OF THE INVENTION

The present subject matter relates generally to energy storage systems and, more particularly, to systems and methods for providing cooling airflow to an energy storage system.

### BACKGROUND OF THE INVENTION

Energy storage systems, such as power conditioning systems, are used in a variety of applications, such as providing emergency back-up power or providing consistent power from variable energy sources, such as wind, solar, or other variable energy sources. In many applications, energy storage systems can include a plurality of energy storage devices, such as batteries, stored in an enclosure, such as a containerized, purpose-built enclosure, a stand-alone building, or an enclosed space within a stand-alone building. The energy storage devices are commonly stored on racks within the enclosure, and a cooling airflow can be provided to the energy storage devices to ensure that they operate within a specified temperature range.

A typical solution to providing cooling for the energy storage devices is to use a fan to provide an airflow to each energy storage device. For example, an enclosure can include one or more racks, wherein each rack can store a plurality of batteries. Each battery can be configured with a small fan to provide an airflow across the battery. Further, a cooling system, such as an air-conditioning system, can provide a cooled airflow to the enclosure. Thus, the fans can blow the cooled airflow across the batteries stored on the racks.

However, in a typical arrangement in which two or more racks of batteries are included in an enclosure, the airflow provided by the fans can encounter several issues. For example, when fans are positioned such that they move an airflow into a common aisle between two racks of batteries, the airflow from fans on one side of an aisle can mix with and counteract the cooling airflow provided by fans on the opposite side. Further, the airflow provided by the fans can often exceed the airflow provided by the air-conditioning system. In such a case, heated airflow can stall in areas of the enclosure, reducing the cooling provided by the fans. Further, when a fan malfunctions, the energy storage device being cooled by that fan may overheat. This can reduce the lifetime of the energy storage devices in the system, and further can increase maintenance and replacement costs.

### BRIEF DESCRIPTION OF THE INVENTION

The invention is defined by the appended claims. In the following any method and/or apparatus referred to as embodiments but nevertheless do not fall within the scope of the appended claims are to be understood as examples helpful in understanding the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 depicts a schematic diagram of one embodiment of an energy storage system according to example aspects of the present disclosure;
FIG. 2 depicts a perspective-view of an energy storage system in an enclosure according to example aspects of the present disclosure;
FIG. 3 depicts an example controller according to example aspects of the present disclosure;
FIG. 4A and 4B depict an energy storage system according to example aspects of the present disclosure;
FIG. 5 depicts an energy storage system according to example aspects of the present disclosure;
FIG. 6A and 6B depict an energy storage system according to example aspects of the present disclosure;
FIG. 7 depicts an energy storage system according to example aspects of the present disclosure;
FIG. 8 depicts a method according to example aspects of the present disclosure.

### DETAILED DESCRIPTION OF THE INVENTION

Reference now will be made in detail to embodiments of the invention, one or more examples of which are illustrated in the drawings. Each example is provided by way of explanation of the invention, not limitation of the invention.

Example aspects of the present disclosure are directed to systems and methods for providing a cooling airflow to an energy storage system. Energy storage systems, such as utility-scale battery banks and back-up power systems, can include one or more energy storage devices stored within a defined thermal zone. For example, a defined thermal zone can be a purpose-built enclosure ("PBE"), such as a container (e.g., shipping container), which can be used to store one or more energy storage devices. In an embodiment, a defined thermal zone can be a building or a room within a building. In another embodiment, a defined thermal zone can be any enclosed space used for storage of one or more energy storage devices in an energy storage system.

In a typical arrangement, an energy storage system can include one or more energy storage banks, such as one or more racks which hold energy storage devices, such as batteries. For example, an energy storage system can include a PBE with two racks arranged on either side of the PBE. Each rack can include a plurality of energy storage devices, and an aisle can run down the middle of the PBE between the two racks. The aisle can provide access to the energy storage devices, such as when a technician desires to perform maintenance on the energy storage system. Each energy storage device can be, for example, a battery, which may include one or more battery cells, one or more battery strings, which may include a plurality of series-connected batteries or battery cells, and/or one or more battery wings, which may include a plurality of parallel-connected battery strings.

The energy storage system includes a thermal control system configured to provide a cooling airflow to the one or more energy storage devices. The thermal control system includes a heat exchanging device, such as an air-conditioning unit. The air-conditioning unit is configured to provide a cooling airflow to the PBE. For example, in an embodiment, an air-conditioning unit can provide a cooling airflow to the PBE, which can be directed into the PBE by one or more cooled airflow passages. Further, a return airflow passage can be configured to receive and direct an exhaust airflow (i.e., an airflow that has previously provided cooling to an energy storage device) to the air-conditioning unit. In an embodiment, each energy storage device can include a fan, which can provide a cooling airflow to the energy storage device. In another embodiment, a tapered duct can be configured to direct a cooled airflow from the air-conditioning unit to the energy storage devices.

The thermal control system includes a moveable element configured to adjust a distribution of airflow within the defined thermal zone (i.e. with the PBE). The moveable element is an airflow curtain configured to direct an exhaust airflow away from the one or more energy storage devices. The airflow curtain can be positioned between two or more energy storage devices, such as two banks of energy storage devices positioned on either side of the PBE. The airflow curtain can be moveable between a plurality of positions, such as a first position, a second position, and a third position. In the first position, the airflow curtain can be configured to electrically insulate a first bank of energy storage devices. For example, the airflow curtain can be moved such that it covers or is suspended next to the battery bank, and due to the electrically-insulating properties of the airflow curtain, the airflow curtain insulates the bank of batteries to prevent a short from occurring. This can be particularly beneficial during maintenance periods, as it can prevent a technician from inadvertently contacting a bank of batteries, causing a short, and possibly suffering an injury or death. Similarly, in a third position, the airflow curtain can electrically-insulate a second bank of batteries by covering or being suspended next to the second bank of batteries. In the second position, the airflow curtain can be configured to direct an exhaust airflow away from the energy storage devices. For example, the airflow curtain can be positioned in the middle of an aisle running between two banks of batteries. The banks of batteries can both be configured such that an exhaust airflow from each bank is directed into the aisle, such as, for example, after a cooling airflow from one or more fans or tapered ducts has provided cooling to one or more energy storage devices. The airflow curtain can isolate the cross-aisle flow of air, and further, direct the airflow either upwards to a return airflow passage, or to one or more return airflow passages on the respective sides of the PBE. In this way, the airflow curtain can direct an exhaust airflow away from one or more energy storage devices.

In an embodiment, the airflow curtain can be attached to a support member, which can be free-standing, attached to the PBE, or attached to a plurality of battery banks. For example the support member can include one or more bars and attachment rings configured to support the airflow curtain, wherein the airflow curtain can move between the plurality of positions by sliding the attachment rings along the bar. Other support members can be used as well. In an embodiment, the flexible curtain can be a single piece of electrically-insulating material. In another embodiment, the airflow curtain can include a plurality of airflow curtain sections that together direct an exhaust airflow away from one or more energy storage devices.

In another embodiment, the moveable element can be a moveable ceiling device configured to control a flow rate of air in the defined thermal zone. For example, a moveable ceiling device can include a moveable ceiling member, which can move in a vertical direction. The moveable ceiling device can also include a structural ceiling member, which can support a heat exchanging device, such as an air-conditioning unit. Between the moveable ceiling member and the structural ceiling member can be a plenum, which can include one or more airflow passages. For example, a return airflow passage can be located in the plenum and can be configured to direct a return airflow to a heat exchanging device, such as an air-conditioning unit. A cooled airflow passage can be located in the plenum and can be configured to direct a cooled airflow from the air-conditioning unit to a mixed airflow passage. A bypass airflow passage be located in the plenum and can also be configured to direct an airflow from the PBE to the mixed airflow passage. A mixed airflow passage can be located in the plenum and can be configured receive cooled airflow from the cooled airflow passage and the bypass airflow passage, and can provide a mixed airflow to the PBE.

The moveable ceiling member can be moveable in the vertical direction to increase or decrease the volume of the PBE. For example, one or more fans can be configured to provide an airflow to one or more energy storage devices, and the exhaust airflow can be directed away from the energy storage devices. The one or more fans together can be configured to move a greater amount of airflow than the air-conditioning unit can accept. For example, the one or more fans may be configured to move 100 cubic feet per minute (CFM) of combined airflow, whereas an air-conditioning unit may only be configured to move 50 CFM of airflow. In such a case, the return airflow passage can accept 50 CFM of airflow to be cooled by the air-conditioning unit ("cooled airflow"), and the bypass airflow passage can accept another 50 CFM of airflow ("bypass airflow"). The bypass airflow and cooled airflow can be combined in the mixed airflow passage, and the mixed airflow can be provided to the PBE for cooling. In an embodiment, the moveable ceiling can be moved in the vertical direction based at least in part on the amount of airflow provided by the fans. Further, the moveable ceiling can be moved to control a flow rate of air within the PBE, and allow for a mixed airflow to be provided to the energy storage devices in an energy storage system.

In this way, the systems and methods of the present disclosure can have a technical effect of providing a cooled airflow to one or more energy storage devices. Further, the systems and methods can direct an exhaust airflow away from energy storage devices, provide increased safety, allow for providing a mixed airflow, and allow for the volume of a defined thermal zone to be changed in response to an amount of airflow being provided to the energy storage devices in an energy storage system.

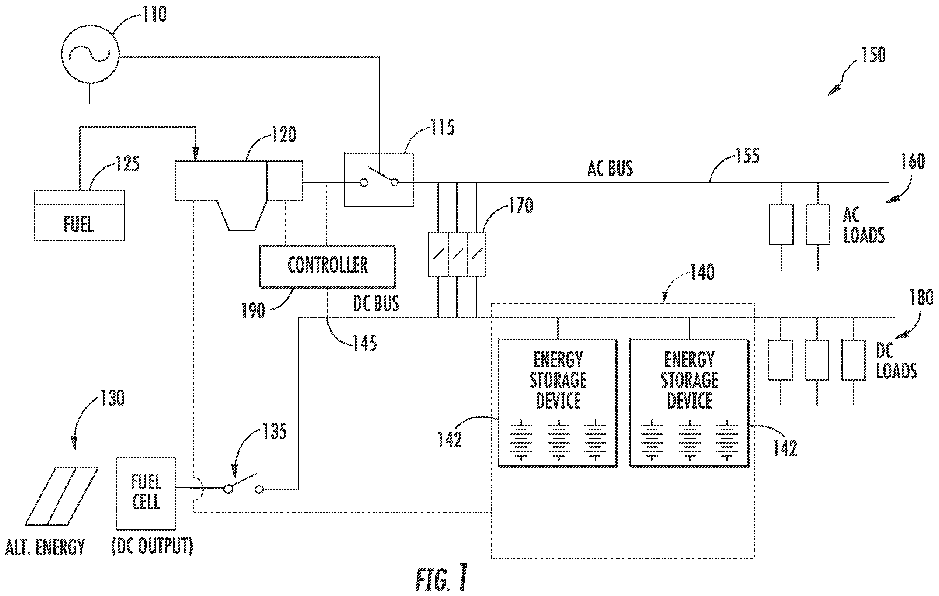

With reference now to the FIGS., example embodiments of the present disclosure will be discussed in further detail. FIG. 1 depicts an example hybrid generator-battery power system 150 that may implement one or more energy storage systems according to example aspects of the present disclosure. Thus, FIG. 1 is provided for illustrative purposes only and is not meant to limit the present disclosure to a particular application. Rather, the systems and methods of the present disclosure can be utilized in any power system. As shown in FIG. 1, the illustrated embodiment depicts multiple sources of power including an AC power grid, an engine-generator power source or engine-generator set (EGS) 120 and a battery power source 140, which is an energy storage system (ESS). A transfer switch 115 allows transfer of operation between the AC grid power and the EGS 120, as well as other AC electrical power that may be available. The EGS 120 typically runs on fuel (e.g., diesel fuel) provided by a fuel source 125 (e.g., a storage tank). An availability switch 135 allows for alternate energy sources 130 (e.g. solar, wind, or fuel cell), if available, to be switched in to a DC bus 145 or an AC bus 155 of the power system 100 as well. If switching into the AC bus 155, a converter 170 (described below) can be coupled between the alternate energy source 130 and the AC bus 155.

The energy storage system 140 is an electrical power source, and may also be referred to as a power storage system or power system. More specifically, in certain embodiments, the energy storage system 140 may include one or more energy storage devices 142. For example, the one or more energy storage devices 142 can be one or more batteries or battery strings, which can be one or more battery cells connected in series. The one or more energy storage devices 142 can also be one or more battery wings, wherein each battery wing includes a plurality of parallel connected battery strings. The energy storage devices 142 may include lithium ion batteries, sodium nickel chloride batteries, sodium sulfur batteries, nickel metal hydride batteries, nickel cadmium batteries, fuel cells, super capacitors, or similar devices.

The AC bus 155 provides AC power to drive AC loads 160 of the system such as, for example, lighting and/or air conditioning for the system 100. Furthermore, the AC bus 155 can provide AC power to a converter 170 which converts AC power to DC power and provides the DC power to the DC bus 145 to drive DC loads 180 of the power system 100 such as the radios, switches, and amplifiers of the power system 100. The DC bus 145 also provides DC power from the converter 170 to recharge the energy storage system 140 and provides DC power from the energy storage system 140 to the DC loads 180 as the energy storage system 140 discharges. A controller 190 may be configured to monitor and/or control various aspects of the system 100, such as commanding the engine of the EGS 120 to turn on or off in accordance with a control logic of the controller 190. In accordance with various embodiments, the controller 190 may be a separate unit or may be part of a battery management system (BMS) of the energy storage system 140.

The converter 170 can be a rectifier or regulator, and may regulate DC power from a DC electrical power source (e.g., a solar energy system or a fuel cell energy system) instead of an AC electrical power source. The terms "rectifier" and "regulator" are used broadly herein to describe a device that conditions energy from a primary power source to provide DC electrical power to DC loads (e.g., DC loads 180) and to an energy storage system (e.g., the energy storage system 140). In general, a primary power source may provide AC or DC electrical power that is used by an energy storage device (e.g., by the DC energy storage system 140) of the power system 100. In certain embodiments, the energy storage system 140 can be a power conditioning system, which can include one or more converters 170.

During operation, when the EGS 120 is on, the EGS 120 provides power to the DC loads 180 and to the energy storage system 140 during a charging part of the cycle. When the EGS 120 is off, the energy storage system 140 provides power to the DC loads 180 during a discharging part of the cycle. The state of the energy storage system 140 can be estimated by observations of the current of the energy storage system 140.

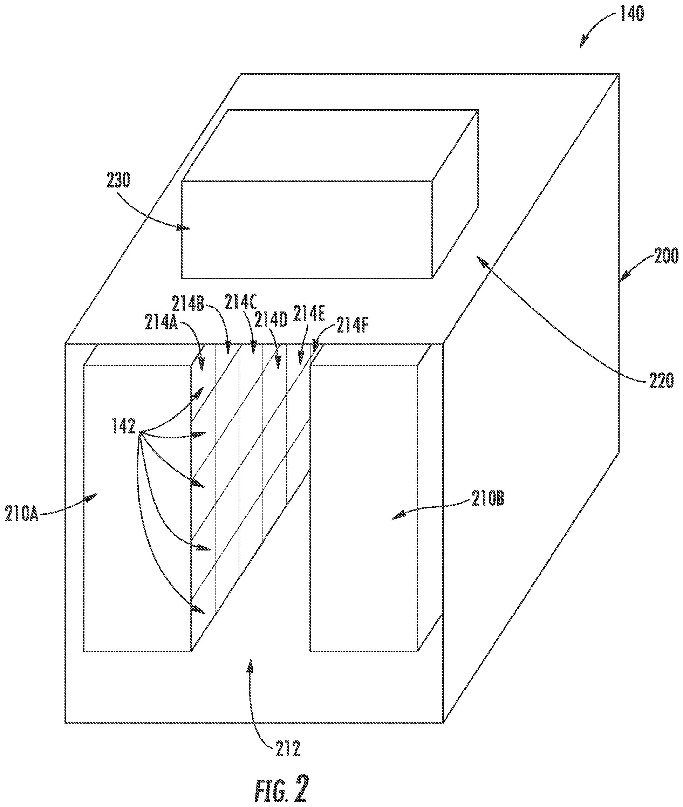

Referring now to FIG. 2, a perspective view of an energy storage system 140 is depicted. The energy storage system can be enclosed within a defined thermal zone 200, such as a purpose built enclosure ("PBE"), a container, a building, a room within a building, or any other suitable enclosure. As shown in FIG. 2, the energy storage system 140 is enclosed within defined thermal zone 200, which is a PBE. The defined thermal zone 200 can include one or more walls, a floor, and a ceiling.

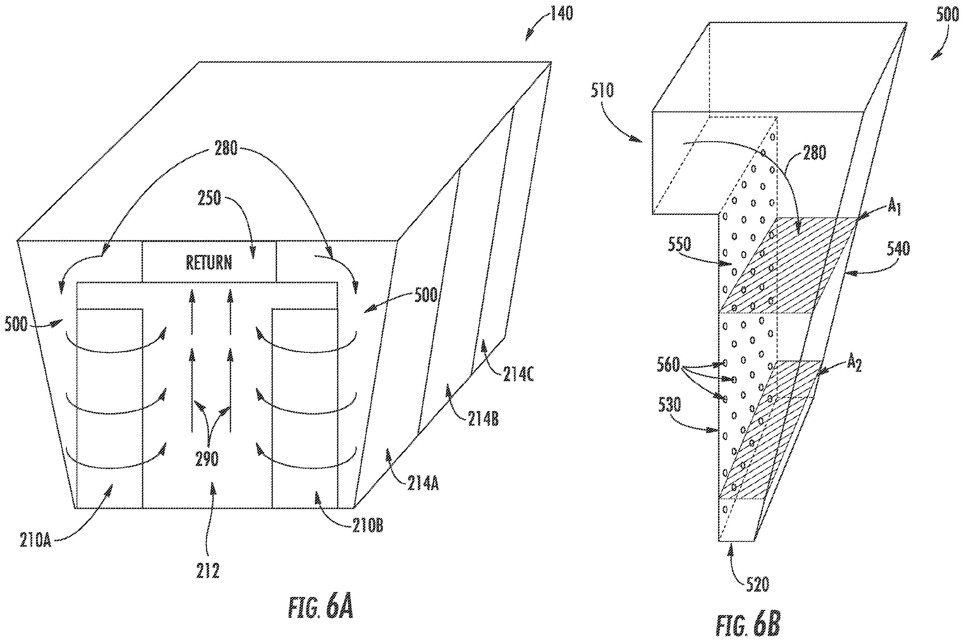

As shown in FIG. 2, the energy storage system 140 can include one or more energy storage devices 142. For example, as shown in FIG. 2, two energy storage banks 210 are depicted, a first energy storage bank 210A and a second energy storage bank 210B. Each energy storage bank 210 can be, for example, a rack configured to store one or more energy storage devices 142. For example, as shown, each energy storage bank 210 includes a plurality of energy storage devices 142 positioned on a rack. In an embodiment, a first energy storage bank 210A can be positioned in a first position in the defined thermal zone 200, and a second energy storage bank 210B can be positioned in a second position in the defined thermal zone 200. For example, as shown in FIG. 2, the first energy storage bank 210A is positioned along a first wall of the defined thermal zone 200, and a second energy storage bank 210B is positioned along a second wall of the defined thermal zone 200. Further, in between the first energy storage bank 210A and the second energy storage bank 210B is a common aisle 212, which can be used by a technician or other individual to access the energy storage devices 142 stored in the energy storage banks 210. In an embodiment, each energy storage bank 210 can include a plurality of zones 214. For example, as shown in FIG. 2, 6 zones are depicted, a first zone 214A, a second zone 214B, a third zone 214C, a fourth zone 214D, a fifth zone 214E, and a sixth zone 214F. Each zone 214 can include, for example, a plurality of energy storage devices 142. In an embodiment, each energy storage bank 210 can be a separate zone 214.

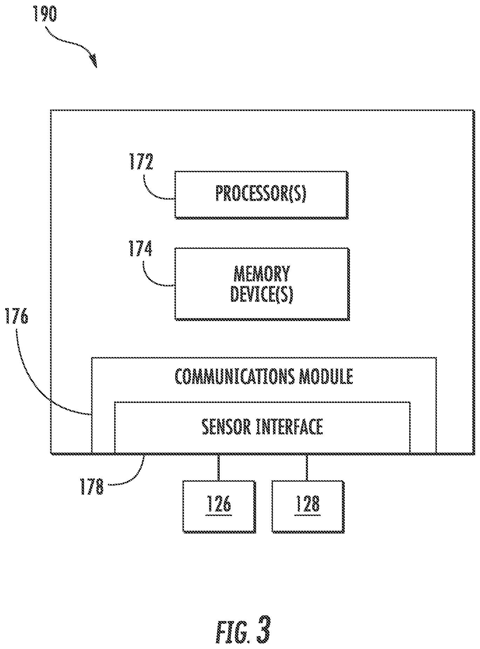

Referring still to FIG. 2, the energy storage system 140 can include a thermal control system 220. The thermal control system 220 can be configured to provide a cooling airflow to the one or more energy storage devices 142 in the energy storage system 140. For example, the thermal control system 220 can include a heat exchanging device 230. As shown in FIG. 2, the heat exchanging device 230 can be positioned on a roof of the defined thermal zone 200 (i.e., the PBE). In an embodiment, the heat exchanging device 230 can be positioned in any position such that it is configured to provide a cooling airflow to the energy storage devices 142. The heat exchanging device 230 can be, for example, an air-conditioning unit configured to remove heat from an airflow that is provided to the defined thermal zone 200. The heat exchanging device 230 can further be any heat exchanging device 200 configured to provide a cooling airflow to the one or more energy storage devices 142. For example, the heat exchanging device 230 can include one or more air circulation devices configured to circulate an airflow to one or more energy storage devices, such as one or more fans (not shown), one or more ducts (not shown), one or more airflow passages (not shown), one or more controllers configured to control the heat exchanging device 230 and other elements (for example, controller 190 depicted in FIG. 3), one or more airflow measuring devices (not shown), one or more temperature measuring devices (not shown), one or more airflow sensors (not shown) and other components. Additional components can also be included in the defined thermal zone 200, such as switchgear, fire suppression systems, and other equipment (not shown).

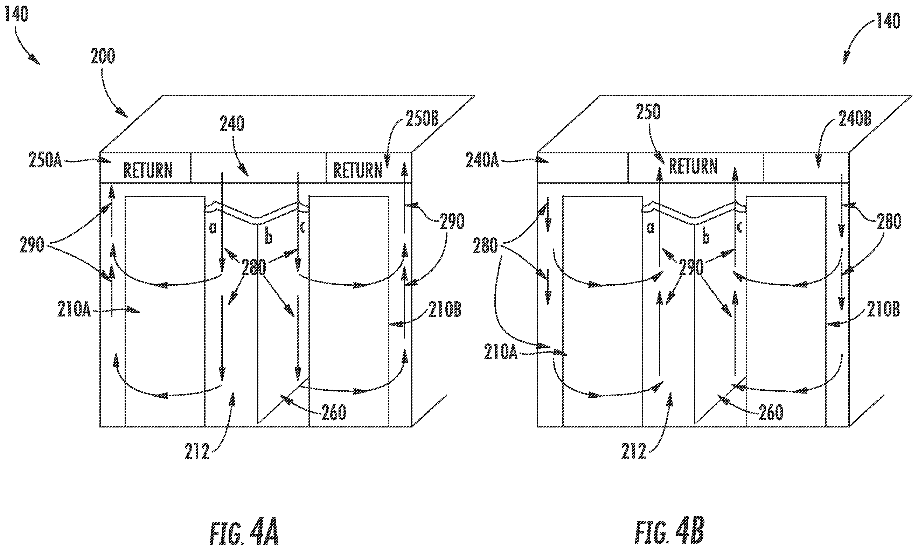

Additionally, as will be discussed in greater detail with respect to FIGS. 4A-B, 5, and 7, the thermal control system can include a moveable element configured to adjust a distribution of airflow within the defined thermal zone. In an embodiment, the movable element can be controllably moved by a controller, such as a controller 190 depicted in FIGS 1 and 3, in response to one or more signals received from one or more sensors in the energy storage system. For example, in an embodiment, a controller can receive a signal indicative of a temperature from one or more temperature sensors, such as one or more thermometers, and can move the moveable element to distribute an airflow in the energy storage system based on the one or more signals received by the one or more temperature sensors. In another embodiment, one or more airflow sensors can be configured to send one or more signals to the controller indicative of an airflow in the energy storage system. The controller can be configured to distribute an airflow in the energy storage system based on the one or more signals received by the one or more airflow sensors. For example, a controller can determine that an airflow distribution needs to be adjusted based at least upon the one or more signals from one or more sensors, such as one or more temperature or airflow sensors and move the moveable element by sending a control signal to one or more actuators associated with a moveable element, and based on the control signal, the one or more actuators can move the moveable element to adjust a distribution of airflow.

As shown particularly in FIGS. 1 and 3, the energy storage system 140 and/or elements in the energy storage system 140 may be controlled by a controller 190. More specifically, FIG. 3 illustrates a block diagram of one embodiment of components that may be included in a controller (such as controller 190 that can be part of the power system 150 of FIG. 1). For example, in several embodiments, the controller 190 is configured to monitor and/or control operation of the energy storage system 140. In addition, in accordance with the present disclosure, the controller 190 may be configured to communicate with the EGS 120 by sending a start-up command to a starter battery 124 so as to start-up the engine of the EGS 120 in accordance with control logic of the controller 190. The controller 190 may also provide control logic for operation of any other components of the energy storage system 140. For example, the controller 190 may be, for example, a logic controller implemented purely in hardware, a firmware-programmable digital signal processor, or a programmable processor-based software-controlled computer.

More particularly, as shown in FIG. 3, the controller 190 can include any number of control modules. As shown, for example, the controller 190 can include one or more processor(s) 172 and associated memory device(s) 174 configured to perform a variety of computer-implemented functions and/or instructions (e.g., performing the methods, steps, calculations and the like and storing relevant data as disclosed herein). The instructions when executed by the processor 172 can cause the processor 172 to perform operations, including providing control commands to the energy storage devices 142 and/or other aspects of the system 100, such as one or more actuators associated with a moveable element. Additionally, the controller 190 may also include a communications module 176 to facilitate communications between the controller 190 and the various components of the system 100. Further, the communications module 176 may include a sensor interface 178 (e.g., one or more analog-to-digital converters) to permit signals transmitted from one or more sensors 126, 128 to be converted into signals that can be understood and processed by the processors 172. It should be appreciated that the sensors (e.g. sensors 126, 128) may be communicatively coupled to the communications module 176 using any suitable means. For example, as shown in FIG. 3, the sensors 126, 128 are coupled to the sensor interface 178 via a wired connection. However, in other embodiments, the sensors 126, 128 may be coupled to the sensor interface 178 via a wireless connection, such as by using any suitable wireless communications protocol known in the art. As such, the processor 172 may be configured to receive one or more signals from the sensors 126, 128. The sensors 126, 128 can be, for example, temperature or airflow sensors positioned within the defined thermal zone 200.

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. The processor 172 is also configured to compute advanced control algorithms and communicate to a variety of Ethernet or serial-based protocols (Modbus, OPC, CAN, etc.). Additionally, the memory device(s) 174 may generally include memory element(s) including, but not limited to, non-transitory computer-readable media (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) 174 may generally be configured to store suitable computer-readable instructions that, when implemented by the processor(s) 172, configure the controller 190 to perform the various functions as described herein. In an embodiment, one or more processors 172 and one or more memory devices 174 can be included in a control system.

Referring now to FIGS. 4A and 4B, an energy storage system 140 according to example aspects of the present disclosure is depicted. Elements that are the same or similar to those shown in FIG. 2 are referred to with the same reference numerals. As shown, an energy storage system 140 can include a first energy storage bank 210A and a second energy storage bank 210B positioned at a first position and second position, respectively, in a defined thermal zone 200 (i.e., a PBE). A common aisle 212 can be located between the first energy storage bank 210A and the second energy storage bank 210B. A thermal control system 220 can include a heat exchanging device 230 (not shown), one or more cooled airflow passages 240, and one or more return airflow passages 250. The thermal control system 220 can also include a moveable element, which can be an airflow curtain 260, as depicted in FIGS. 4A and 4B. The airflow curtain 260 can be configured to direct an exhaust airflow away from the one or more energy storage devices. As used herein, the term "exhaust airflow" means an airflow that has provided cooling to an energy storage device.

For example, as shown in FIG. 4A, a single cooled airflow passage 240 can be configured to provide a cooled airflow 280 to the defined thermal zone 200, and can be configured to provide the cooled airflow 280 into the common aisle 212. The airflow curtain 260 can direct a cooled airflow 280 to the first energy storage bank 210A and second energy storage bank 210B, thereby displacing an exhaust airflow 290 away from the one or more energy storage devices. Further, once displaced, the exhaust airflow 290 can travel to one or more return airflow passages 250 to be directed to the heat exchanging device 230. For example, as depicted in FIG. 4A, a first return airflow passage 250A can be positioned on one side of the defined thermal zone 200, and a second return airflow passage 250B can be positioned on an opposite side of the defined thermal zone 200. In an embodiment, one or more fans can be configured to further direct the cooled airflow 280 over the one or more energy storage devices 142 in the energy storage system, such as one or more energy storage devices 142 positioned in either the first energy storage bank 210A or second energy storage bank 210B. In another embodiment, a tapered duct, as will be discussed in greater detail with respect to FIGS. 6A and 6B below, can provide a cooled airflow 280 to the one or more energy storage devices 142. In this way, the airflow curtain 260 can direct an exhaust airflow 290 away from the one or more energy storage devices 142.

Further, as shown in FIG. 4B, two cooled airflow passages 240 can be configured to provide a cooled airflow 280 to the defined thermal zone 200, such as a first cooled airflow passage 240A positioned on a first side of the defined thermal zone 200 and a second cooled airflow passage 240B positioned on an opposite side of the defined thermal zone 200, as depicted in FIG. 4B. In an embodiment, the cooled airflow 280 can be directed to the one or more energy storage devices by a tapered duct, as will be discussed in greater detail with respect to FIGS. 6A and 6B below. In another embodiment, one or more fans can be positioned to blow the cooled airflow 280 across the one or more energy storage devices 142 and into the common aisle 212. The airflow curtain 260 can be positioned between the first energy storage bank 210A and the second energy storage bank 210B. An exhaust airflow 290 can then be directed by the airflow curtain 260 to a return airflow passage 250. In this way, the airflow curtain 260 can direct an exhaust airflow 290 away from the one or more energy storage devices 142.

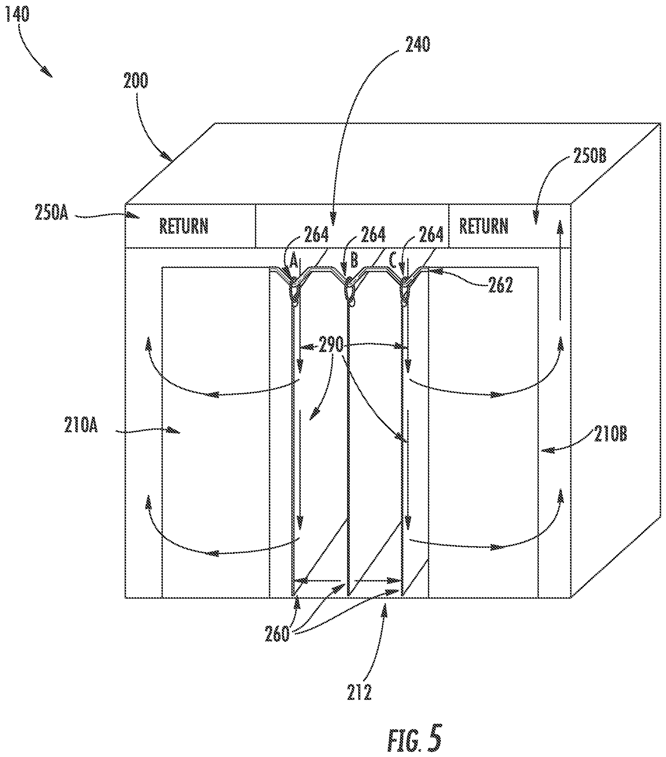

Referring now to FIG. 5, an energy storage system 140 according to example aspects of the present disclosure is depicted. Elements that are the same or similar to those shown in FIGS. 2, 4A, and 4B are referred to with the same reference numerals. As shown, an energy storage system 140 can include a first energy storage bank 210A and a second energy storage bank 210B positioned at a first position and second position, respectively, in a defined thermal zone 200 (i.e., a PBE). A common aisle 212 can be located between the first energy storage bank 210A and the second energy storage bank 210B. An airflow curtain 260 can be positioned between the first energy storage bank 210A and the second energy storage bank 210B. Further, the airflow curtain 260 can be moveable between one or more positions, such as a first position A, a second position B, and a third position C, as illustrated in FIG. 5.

In an embodiment, an airflow curtain 260 can be made from a flexible, electrically-insulating material, such as rubber, a thermoplastic vulcanizate, thermoplastic olefin, or other material. For example, the airflow curtain 260 can be made of a flexible material that can insulate one or more energy storage devices. In an embodiment, the flexible material can be a flexible material that is electrically-insulating up to at least a threshold voltage, such as a threshold of 1000 volts. In an embodiment, the airflow curtain 260 can be made from a solid piece of electrically-insulating material, or from several pieces of electrically-insulating material that have been joined together to form a single airflow curtain 260, such as strips of material that have been fused, stitched, or otherwise joined together. In another embodiment, the airflow curtain 260 can be formed by several pieces or strips of material which have not been joined together, such as pieces of electrically-insulating material that overlap with one another when the airflow curtain 260 is in one or more positions. In an embodiment, the airflow curtain 260 can be made from an insulating material that is flexible when an operating temperature of the energy storage system is within a specified range, such as a temperature range from -40 degrees Celsius to 60 degrees Celsius.

In an embodiment, the airflow curtain 260 can include a support member configured to support the airflow curtain 260 in one or more positions, such as a first position A, a second position B, and a third position C, as illustrated in FIG. 5. For example, in an embodiment, the support member can be a support bar 262 and one or more attachment rings 264. Additionally, and/or alternatively, the support member can be any support member configured to support the airflow curtain 260. In an embodiment, the one or more attachment rings 264 can attach the airflow curtain 260 to the support bar 262. Further, in embodiment, the one or more attachment rings 264 can be moveable along the support bar 262 to move the airflow curtain 260 between the one or more positions. In an embodiment, a support bar 262 can include one or more depressions, wherein each depression can be associated with a position of the airflow curtain 260. For example, as depicted in FIG. 5, a support bar 262 can include 3 depressions, a first depression corresponding to a position A, a second depression corresponding to a position B, and a third depression corresponding to a position C. In an embodiment, the airflow curtain 260 can be positioned generally in an orientation normal to the support bar 262, as shown in FIG. 5. The attachment rings 264 can be configured to move along the support bar 262 and rest in the one or more depressions on the support bar 262, thereby positioning the airflow curtain 260 in the one or more positions.

For example, in an embodiment, the airflow curtain can be moveable into a first position A wherein the airflow curtain is configured to electrically insulate a first energy storage device. As depicted in FIG. 5, when the airflow curtain 260 is in the first position A, the airflow curtain 260 can electrically insulate the first energy storage bank 210A. For example, the electrically-insulating material of the airflow curtain 260 can electrically-insulate the first energy storage bank 210A by covering or being suspended next to the first energy storage bank 210A. Similarly, in the third position C, the airflow curtain 260 can electrically insulate the second energy storage bank 210B by, for example, covering or being suspended next to the second energy storage bank 210B. In the second position B, the airflow curtain can direct an exhaust airflow, as shown in FIGS. 4A and 4B. In an embodiment, the airflow curtain 260 can be controllably movable in response to one or more control signals sent by a controller, such as a controller 190. For example, a controller 190 can determine that an airflow distribution needs to be adjusted based at least upon the one or more signals from one or more sensors, such as one or more temperature or airflow sensors and move the airflow curtain 260 by sending a control signal to one or more actuators associated with the airflow curtain 260, and based on the control signal, the one or more actuators can move the airflow curtain 260 to adjust a distribution of airflow.

In one or more embodiments, the support member can include a plurality of support bars 262 and attachment rings 264, such as a first support bar 262 at a first end of an energy storage bank 210, and a second support bar 262 at a second end of an energy storage bank 210, such that the curtain is supported by the plurality of support bars and extends the length of the energy storage bank. Further, in one or more embodiments, each support bar 262 can be attached to one or more energy storage devices, such as a first energy storage bank 210A and a second energy storage bank 210B. In one or more embodiments, one or more support bars 262 can be free-standing support bars 262, such that each can be moved between positions in the defined thermal zone 200. In one or more embodiments, one or more support bars 262 can be attached to the defined thermal zone 200, such as to a wall of a PBE.

In an embodiment, the airflow curtain 260 can be moved between positions to direct an exhaust airflow when the one or more energy storage devices are in operation or to electrically insulate an energy storage device, such as when a technician is performing service on one or more energy storage devices in the energy storage system. For example, a technician can electrically insulate a first energy storage bank 210A by positioning the airflow curtain 260 in a first position A while performing service on a second energy storage bank 210B. Further, an advantage provided by electrically insulating one or more energy storage devices is that the width of an aisle, such as a common aisle 212, can be reduced while still meeting relevant safety codes and standards, such as the National Electrical Safety Code. This can further be beneficial, as it can allow for a single system to be customizable for various battery applications using a specific enclosure, such as a PBE, and reduce the footprint of the enclosure for a given battery capacity or power rating.

Referring now to FIG. 6A, an energy storage system 140 according to example aspects of the present disclosure is shown. Elements that are the same or similar to those shown in FIGS. 2, 4A, 4B, and 5 are referred to with the same reference numerals. As shown, an energy storage system 140 can include a first energy storage bank 210A and a second energy storage bank 210B positioned at a first position and second position, respectively, in a defined thermal zone 200 (i.e., a PBE). A common aisle 212 can be located between the first energy storage bank 210A and the second energy storage bank 210B. Each energy storage bank can include a plurality of zones 214, such as a first zone 214A, a second zone 214B, and a third zone 214C, as shown in FIG. 6A.

A heat exchanging device (not shown) can provide a cooled airflow 280 to one or more tapered ducts 500. The tapered ducts 500 can be configured to provide an airflow to the one or more energy storage devices 142, such as energy storage devices 142 in a first energy storage bank 210A or a second energy storage bank 210B. In an embodiment, an energy storage system 140 can include a plurality of tapered ducts 500, such as a tapered duct for each zone 214. Further, in an embodiment, one or more tapered ducts 500 can be configured to provide a cooled airflow 280 to each energy storage bank 210 in an energy storage system 140. In an embodiment, each tapered duct 500 can be in airflow communication with a heat exchanging device 230, such as an air-conditioning unit. For example, a tapered duct 500 can be configured to receive a cooled airflow 280 from a cooled airflow passage 240.

As will be discussed in greater detail with respect to FIG. 6B, each tapered duct can be configured to provide a cooled airflow to one or more energy storage devices 142. After a cooled airflow 280 has provided cooling to the one or more energy storage devices 142, an exhaust airflow 290 can then be directed to a return airflow passage 250. In an embodiment, an airflow curtain 260 can be configured to direct an exhaust airflow 290 to a return airflow passage 250.

Referring now to FIG. 6B, a tapered duct 500 according to example aspects of the present disclosure is depicted. A tapered duct 500 can include an opening 510 in airflow communication with a heat exchanging device 230, such as an air-conditioning unit. For example, a cooled airflow passage 240 can direct a cooled airflow 280 from a heat exchanging device 230, and an opening 510 of a tapered duct 500 can be in airflow communication with the heat exchanging device 230 by, for example, coupling the opening 510 of the tapered duct 500 to the cooled airflow passage 240. The tapered duct can further include a terminal end 520. For example, the terminal end 520 can be a dead-end or wall of the tapered duct 500 such that airflow can travel through the tapered duct 500 to the terminal end 520, but cannot proceed further. The tapered duct 500 can further include an airflow inlet surface 530. For example, the airflow inlet surface can be a surface on an interior side of a tapered duct 500 such that the airflow inlet surface 530 is a surface in closest proximity to the one or more energy storage devices 142. The tapered duct 500 can include an airflow passage 540 configured to direct an airflow from the opening 510 to the terminal end 520. For example, as depicted in FIG. 6B, the airflow passage 540 can direct a cooled airflow 280. The airflow passage 540 can be pressurized, such as by a fan associated with the heat exchanging device 230. The tapered duct 500 can define a cross-sectional area A which is generally normal to the direction of the cooled airflow 280. In an embodiment, the airflow passage 540 of the tapered duct 500 can decrease in cross-sectional area A from the opening 510 to the terminal end 520. For example, as depicted in FIG. 6B, a first cross-sectional area A₁ proximate to the opening 510 is greater than a second cross-sectional area A₂ proximate to the terminal end 520. Thus, as shown in FIG. 6B, the airflow passage 540 of the tapered duct 500 generally decreases in cross-sectional area A from the opening 510 to the terminal end 520.

Further, as depicted in FIG. 6B, the tapered duct 500 can include a cooling air inlet array 550 on the airflow inlet surface 530, which can be a plurality of airflow holes 560 on the cooling air inlet array configured to direct an airflow to the one or more energy storage devices 142. For example, the airflow holes 560 can allow a cooled airflow 280 to exit the tapered duct 500 and pass over one or more energy storage devices 142 in an energy storage bank 210. Further, as cooled airflow 280 exits the tapered duct 500 through the airflow holes 560, the air pressure in the airflow passage 540 can be generally sustained due to the decreasing cross-sectional area A of the tapered duct.

In an embodiment, the size and/or number of the airflow holes 560 in the cooling air inlet array 550 can be determined based on the amount of cooled airflow 280 to be provided to the one or more energy storage devices 142. Further, in an embodiment, an amount of the decrease in the cross-sectional area A of the tapered duct 500 can be determined based on one or more parameters, such as the amount of cooled airflow 280 to be provided to the airflow passage 540, the size and number of airflow holes 560, the dimensions of the tapered duct 500, or other parameters. In an embodiment, the airflow holes 560 can be varied in size based on the position of the airflow holes 560 in the cooling air inlet array 550. In an embodiment, each tapered duct 500 can be configured to provide a cooled airflow 280 based on the energy storage devices 142 to be cooled. For example, each zone 214 in an energy storage bank 210 can include one or more energy storage devices 142, and each zone 214 can have an associated tapered duct 500 configured to provide a cooled airflow 280 to the zone 214, and each tapered duct 500 can be configured based on the amount and type of energy storage devices 142 in the zone 214. In this way, the tapered duct 500 can be configured to provide a cooled airflow 280 to one or more energy storage devices 142, such that the cooled airflow 280 can be tailored based on the parameters of the energy storage devices 142 to be cooled. Further, each tapered duct 500 can be configured to provide a cooled airflow 280 that is generally consistent across all energy storage devices 142 that are cooled by the tapered duct 500. Moreover, the tapered duct 500 can provide an increased reliability to the energy storage system 140 due to the elimination of individual fans, which can further reduce maintenance costs.

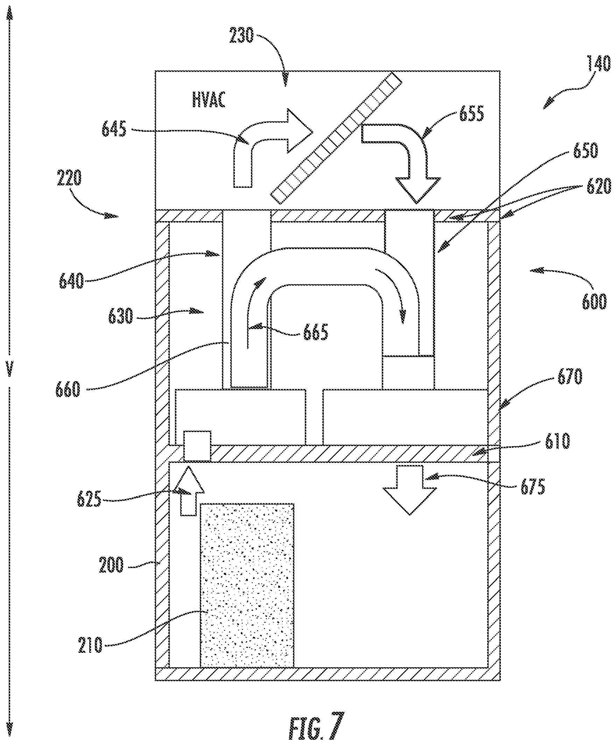

Referring now to FIG. 7, an energy storage system 140 according to example aspects of the present disclosure is shown. Elements that are the same or similar to those shown in FIGS. 2, 4A, 4B, 5, and 6A are referred to with the same reference numerals.

As shown in FIG. 7, an energy storage system can include an energy storage device 142, such as an energy storage device 142 in an energy storage bank 210, which can be positioned in a defined thermal zone 200. The energy storage system 140 can include a thermal control system 220. The thermal control system 220 can include a heat exchanging device 230, such as an air-conditioning unit, and a moveable element configured to adjust a distribution of airflow within the defined thermal zone 200. As depicted in FIG. 7, the moveable element can be a moveable ceiling device 600. The moveable ceiling device 600 can be configured to adjust a distribution of airflow within a defined thermal zone 200 by, for example, controlling a flow rate of air in the defined thermal zone 200.

In an embodiment, the energy storage system 140 can include one or more energy storage device fans ("fans," not shown). Each fan can be configured to provide an airflow to at least one energy storage device 142. For example, an energy storage bank 210 can include a plurality of energy storage devices 142. One or more fans can be configured to provide a cooling airflow to the energy storage devices 142 in the energy storage bank 210. For example, in an embodiment, each energy storage device 142 can have a fan configured to provide a cooling airflow to the energy storage device 142. In an energy storage system 140 in which one or more fans are configured to provide a cooling airflow to one or more energy storage devices 142, the total airflow provided by the one or more fans may exceed the airflow that can be accepted by a heat exchanging device 230, such as an air-conditioning unit. For example, a one or more fans may together provide a cumulative airflow of 100 cubic feet per minute ("CFM") of airflow (i.e., an exhaust airflow 625), whereas a heat exchanging device 230 may configured to only provide a cooling airflow of 50 CFM. In such a system, 50 CFM of airflow will therefore not be cooled by the heat-exchanging device 230. Further, exhaust airflow 625 from the one or more fans may interfere with cooling the energy storage devices 142. Exhaust airflow 625 can correspond to, for example, an exhaust airflow 290 shown in FIGS. 3-5A.

In an embodiment, a moveable ceiling device 600 can be used to control a flow rate of air in the defined thermal zone 200. A moveable ceiling device 600 can include a moveable ceiling member 610. The moveable ceiling member 610 can be configured to move in a vertical direction V, as shown in FIG. 7. For example, the moveable ceiling member 610 can be configured to move upwards in the vertical direction V to increase the volume of the defined thermal zone 200, or the moveable ceiling member 610 can be configured to move downwards in the vertical direction V to decrease the volume of the defined thermal zone 200. This can be accomplished by one or more actuators, pulleys, or other mechanisms (not shown) which are configured to move the moveable ceiling member 610 in the vertical direction V. In an embodiment, the moveable ceiling member 610 can be controllably movable in response to one or more control signals sent by a controller, such as a controller 190. For example, a controller 190 can determine that an airflow distribution needs to be adjusted based at least upon the one or more signals from one or more sensors, such as one or more temperature or airflow sensors and move the moveable ceiling member 610 by sending a control signal to one or more actuators associated with the moveable ceiling member 610, and based on the control signal, the one or more actuators can move the moveable ceiling member 610 to adjust a distribution of airflow.

The moveable ceiling device 600 can also include a structural ceiling member 620. The structural ceiling member 620 can be a fixed ceiling member such that it does not move, and can be located at a position above the moveable ceiling member 610 in the vertical direction V. In an embodiment, the structural ceiling member 620 can support a heat exchanging device 230. The structural ceiling member 620 and the moveable ceiling member 610 can together define a plenum 630 in the space between the structural ceiling member 620 and the moveable ceiling member 610.

Within the plenum 630, several airflow passages can be configured to receive and direct an airflow to one or more components of the energy storage system 140. For example, a return airflow passage 640 can be configured to direct a return airflow 645 from the defined thermal zone 200 to the heat exchanging device 230. The return airflow passage 640 can be, for example, a return airflow passage 250 as shown in FIGS. 2-5A. The return airflow 645 can be, for example, a portion of an exhaust airflow 625 which has provided cooling to one or more energy storage devices 142. The plenum 630 can further include a cooled airflow passage 650, a bypass airflow passage 660, and a mixed airflow passage 670. The cooled airflow passage 650 can direct a cooled airflow 655 from the heat exchanging device 230 to the mixed airflow passage 670. The bypass airflow passage 660 can similarly direct a bypass airflow 665 from the defined thermal zone 200 to the mixed airflow passage 670. The bypass airflow can be, for example, a portion of an exhaust airflow 625. The mixed airflow passage 670 can mix the cooled airflow 655 and the bypass airflow 665 into a mixed airflow 675, and provide the mixed airflow 675 to the defined thermal zone 200.

For example, one or more fans can be configured to provide a cooling airflow to one or more energy storage devices 142, such as a combined 100 CFM of cooling airflow, which can produce 100 CFM of exhaust airflow 625. A heat exchanging device 230 can be configured to cool a return airflow 645, such as 50 CFM of the exhaust airflow 625. The remaining 50 CFM of exhaust airflow 625 can enter the bypass airflow passage, and become a bypass airflow 665. The 50 CFM of cooled airflow 655 from the heat exchanging device 230 and the 50 CFM of bypass airflow 665 from the bypass airflow passage can together mix in the mixed airflow passage 670 to become 100 CFM of mixed airflow 675. The 100 CFM of mixed airflow 675 can then be provided to the defined thermal zone 200. Thus, as illustrated in FIG. 7, the one or more fans can be configured to move a greater airflow (i.e., an exhaust airflow 625) than the cooled airflow 655 provided by the heat exchanging device 230. Further, as illustrated in FIG. 7, a portion of the exhaust airflow 625 can be directed into the cooled airflow passage 655 and a portion of the exhaust airflow 625 can be directed into the bypass airflow passage 660.

In an embodiment, the moveable ceiling member 610 can be moveable in the vertical direction V based at least in part on the amount of airflow provided by one or more fans. For example, the moveable ceiling member 610 can move moved in the vertical direction to increase or decrease the volume of the defined thermal zone 200. By changing the volume of the defined thermal zone, the moveable ceiling member can change the distribution of airflow in the defined thermal zone 200 by, for example, increasing or decreasing the amount of bypass airflow 665. Further, in an embodiment, the moveable ceiling member can be moveable along the vertical direction V based at least in part on the amount of airflow provided by the one or more fans. For example, if a cooling airflow provided by one or more fans is increased, it may be advantageous to decrease the volume of the defined thermal zone to further increase the amount of air turnover in the defined thermal zone 200.

In certain arrangements, the amount of airflow provided to an energy storage device 142 may be more important than the temperature of the cooling airflow. In such an energy storage system 140, increasing the amount of airflow, or the distribution of airflow in a defined thermal zone 200, can have a greater effect on cooling the one or more energy storage devices 142 than providing a cooler airflow. Thus, an advantage provided by example aspects of the present disclosure is that the amount of airflow can be increased without requiring additional cooled air from a heat exchanging device 230. Moreover, using a moveable ceiling device 600 can allow for a single enclosure, such as a building, PBE, or room within a building, to be used for several different applications, such as using a PBE for either power or energy battery use.

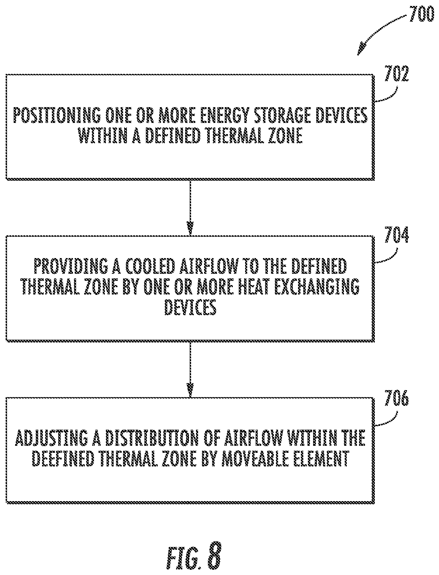

Referring now to FIG. 8, an example method (700) according to example aspects of the present disclosure is depicted. The method (700) can be used for providing a cooling airflow for an energy storage system, such as an energy storage system 140 as described herein. The energy storage system 140 can include one or more energy storage devices 142, and a thermal control system 220, which can include a heat exchanging device 230 configured to provide a cooling airflow, such as an air-conditioning unit, and a moveable element configured to adjust a distribution of airflow. In an embodiment, the method (700) or some portions of the method (700) can be implemented by one or more controllers, such as a controller 190.

At (702), the method (700) can include positioning the one or more energy storage devices within a defined thermal zone. For example, a defined thermal zone can be a defined thermal zone 200, such as PBE, building, or an enclosed space within a building. The one or more energy storage devices can be positioned within the defined thermal zone, such as by positioning one or more energy storage devices 142 on one or more energy storage banks 210 within a PBE.

At (704), the method (700) can include providing a cooled airflow to the defined thermal zone by the one or more heat exchanging devices. For example, a heat exchanging device 230 can have a return airflow passage 250 configured to receive an exhaust airflow 290 from one or more energy storage devices 142. The heat exchanging device 230 can cool the exhaust airflow 290 and provide a cooled airflow 280 to the defined thermal zone 200. The cooled airflow 280 can be further distributed to the one or more energy storage devices 142 by, for example, one or more fans or a tapered duct 500.

At (706), the method (700) can include adjusting a distribution of airflow within the defined thermal zone by the moveable element. For example, a moveable element can be an airflow curtain 260. The airflow curtain 260 can be configured to direct an exhaust airflow 290 away from the one or more energy storage devices 142. Further, the moveable element can be a moveable ceiling device configured to control a flow rate of air in the defined thermal zone. For example, a moveable ceiling member 610 of a moveable ceiling device 600 can be moveable in a vertical direction V to increase or decrease a volume of air in a defined thermal zone 200. The moveable ceiling member can be moveable along the vertical direction to adjust a flow rate of air in the defined thermal zone by increasing or decreasing an amount of bypass airflow 665 that flows into a bypass airflow passage 660 of the moveable ceiling device 600. In an embodiment, the moveable element can be controllably movable in response to one or more control signals sent by a controller, such as a controller 190. For example, a controller 190 can determine that an airflow distribution needs to be adjusted based at least upon the one or more signals from one or more sensors, such as one or more temperature or airflow sensors and move the moveable element by sending a control signal to one or more actuators associated with the moveable element, and based on the control signal, the one or more actuators can move the moveable element to adjust a distribution of airflow.

Although specific features of various embodiments of the invention may be shown in some drawings and not in others, this is for convenience only. In accordance with the principles of the invention, any feature of a drawing may be referenced and/or claimed in combination with any feature of any other drawing.
This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims.

## Claims

1. An energy storage system (140), comprising:
one or more energy storage devices (142) positioned within a defined thermal zone (200); and
a thermal control system (220) configured to provide a cooling airflow to the one or more energy storage devices (142), the thermal control system (220) comprising:
a heat exchanging device (230) configured to provide a cooled airflow (280) to the defined thermal zone (200), and
a moveable element configured to adjust a distribution of airflow within the defined thermal zone (200); wherein
the moveable element comprises an airflow curtain (260) configured to direct an exhaust airflow (290, 625) away from the one or more energy storage devices (142), wherein the exhaust airflow (290, 625) comprises an airflow that has provided cooling to the one or more energy storage devices (142); and
the airflow curtain (260) comprises a flexible, electrically-insulating material.

2. The energy storage system (140) of claim 1, wherein the one or more energy storage devices (142) comprise at least a first energy storage device (142) and a second energy storage device (142), wherein the first energy storage device (142) is positioned at a first location in the defined thermal zone (200), wherein the second energy storage device (142) is positioned at a second location in the defined thermal zone (200), wherein the airflow curtain(260) is positioned between the first energy storage device (142) and the second energy storage device (142).

3. The energy storage system (140) of claim 2, wherein the airflow curtain (260) is moveable between at least a first position, a second position, and a third position, wherein the airflow curtain (260) is configured to electrically insulate the first energy storage device (142) in the first position, wherein the airflow curtain (260) is configured to direct an exhaust airflow (290, 625) in the second position, and wherein the airflow curtain (260) is configured to electrically insulate the second energy storage device (142) in the third position.

4. The energy storage system (140) of claim 3, wherein the moveable element further comprises:
a support member configured to support the airflow curtain (260) in the first position, the second position, and the third position.

5. The energy storage system (140) of claim 4, wherein the support member comprises a support bar (262) and at least one attachment ring (264), wherein the attachment ring (264) is configured to attach the airflow curtain (260) to the support bar (262), wherein the attachment ring (264) is moveable along the support bar (262) to move the airflow curtain (260) between the first position, the second position, and the third position.

6. The energy storage system (140) of claim 1, further comprising:
a tapered duct (500) configured to provide an airflow to the one or more energy storage devices (142);
the tapered duct (500) defining an opening (510) in airflow communication with the heat exchanging device (230), the opening (510) configured to receive a cooled airflow (280) from the heat exchanging device (230);
the tapered duct (500) further defining a terminal end (520);
the tapered duct (500) further defining an airflow inlet surface (530);
the tapered duct (500) defining a cross-sectional area;
the tapered duct (500) comprising an airflow passage (540) decreasing in cross-sectional area from the opening (510) to the terminal end (520); and
a cooling air inlet array (550) located on the airflow inlet surface (530), the cooling air inlet array (550) comprising a plurality of airflow holes (560) configured to direct an airflow to the one or more energy storage devices (142).

7. The energy storage system (140) of claim 1, further comprising:
one or more energy storage device fans, wherein each energy storage device fan is configured to provide an airflow to at least one energy storage device (142).

8. The energy storage system (140) of claim 7, wherein the moveable element comprises a moveable ceiling device (600) configured to control a flow rate of air in the defined thermal zone (200).

9. The energy storage system (140) of claim 8, wherein the moveable ceiling device (600) comprises:
a moveable ceiling member (610), the moveable ceiling member (610) defining a vertical direction, wherein the moveable ceiling member (610) is moveable along the vertical direction;
a structural ceiling member (620), the structural ceiling member (620) comprising a fixed member located at a position above the moveable ceiling member (610), the structural ceiling member (620) and moveable ceiling member (610) together defining a plenum (630) in the space between the structural ceiling member (620) and the moveable ceiling member (610); wherein the structural ceiling member (620) supports the heat exchanging device (230);
a return airflow passage (640) configured to direct a return airflow (645) to the heat exchanging device (230), the return airflow passage (640) located within the plenum (630);
a cooled airflow passage (650) located within the plenum (630);
a mixed airflow passage (670) located within the plenum (630); and
a bypass airflow passage (660) located within the plenum (630);
wherein the cooled airflow passage (650) is configured to direct a cooled airflow (655) from the heat exchanging device (230) to the mixed airflow passage (670);
wherein the bypass airflow passage (660) is configured to direct a bypass airflow (665) from the defined thermal zone (200) to the mixed airflow passage (670); and
wherein the mixed airflow passage (670) is configured to mix the cooled airflow (655) and the bypass airflow (665) into a mixed airflow (675), wherein the mixed airflow passage (670) is further configured to provide the mixed airflow (675) to the defined thermal zone (200).

10. The energy storage system (140) of claim 9, wherein moveable ceiling member (610) is moveable along the vertical direction to increase or decrease the volume of the defined thermal zone (200).

11. The energy storage system (140) of claim 9, wherein the one or more energy storage device fans are configured to move a greater airflow than the cooled airflow (655) provided by the heat exchanging device (230), wherein a portion of the airflow from the one or more energy storage device fans is directed into the return airflow passage (640), and wherein a portion of the airflow from the one or more energy storage device fans is directed into the bypass airflow passage (660).

12. The energy storage system (140) of claim 9, wherein the moveable ceiling member (610) is moveable along the vertical direction based at least in part on the amount of airflow provided by the one or more energy storage device fans.

13. A method (700) for providing a cooling airflow for an energy storage system (140), the energy storage system (140) comprising one or more energy storage devices (142) and a thermal control system (220) configured to provide a cooling airflow to the one or more energy storage devices (142), the thermal control system (200) comprising a heat exchanging device (230) configured to provide a cooling airflow and a moveable element configured to adjust a distribution of airflow, the method (700) comprising:
(at 702) positioning the one or more energy storage devices (142) within a defined thermal zone (200);
(at 704) providing a cooled airflow (280, 655) to the defined thermal zone (200) by the one or more heat exchanging devices (230); and
adjusting a distribution of airflow within the defined thermal zone (200) by the moveable element; wherein
the moveable element comprises an airflow curtain (260) configured to direct an exhaust airflow (290, 625) away from the one or more energy storage devices (142), wherein the exhaust airflow (290, 625) comprises an airflow that has provided cooling to the one or more energy storage devices (142); and
the airflow curtain (260) comprises a flexible, electrically-insulating material.

## Patentansprüche

1. Energiespeichersystem (140), umfassend:
eine oder mehrere Energiespeichervorrichtungen (142), die innerhalb einer definierten thermischen Zone (200) positioniert sind; und
ein thermisches Steuersystem (220), das konfiguriert ist, um einen Kühlluftstrom an die einen oder die mehreren Energiespeichervorrichtungen (142) bereitzustellen, wobei das thermische Steuersystem (220) umfasst:
eine Wärmetauschervorrichtung (230), die konfiguriert ist, um einen gekühlten Luftstrom (280) an die definierte thermische Zone (200) bereitzustellen, und
ein bewegliches Element, das konfiguriert ist, um eine Verteilung des Luftstroms innerhalb der definierten thermischen Zone (200) einzustellen; wobei
das bewegliche Element einen Luftstromvorhang (260) umfasst, der konfiguriert ist, um einen Abluftstrom (290, 625) von der einen oder den mehreren Energiespeichervorrichtungen (142) wegzuleiten, wobei der Abluftstrom (290, 625) einen Luftstrom umfasst, der an die eine oder die mehreren Energiespeichervorrichtungen (142) Kühlung bereitgestellt hat; und
der Luftstromvorhang (260) ein flexibles, elektrisch isolierendes Material umfasst.

2. Energiespeichersystem (140) nach Anspruch 1, wobei die eine oder mehreren Energiespeichervorrichtungen (142) mindestens eine erste Energiespeichervorrichtung (142) und eine zweite Energiespeichervorrichtung (142) umfassen, wobei die erste Energiespeichervorrichtung (142) an einer ersten Stelle in der definierten thermischen Zone (200) positioniert ist, wobei die zweite Energiespeichervorrichtung (142) an einer zweiten Stelle in der definierten thermischen Zone (200) positioniert ist, wobei der Luftstromvorhang (260) zwischen der ersten Energiespeichervorrichtung (142) und der zweiten Energiespeichervorrichtung (142) positioniert ist.

3. Energiespeichersystem (140) nach Anspruch 2, wobei der Luftstromvorhang (260) zwischen mindestens einer ersten Position, einer zweiten Position und einer dritten Position beweglich ist, wobei der Luftstromvorhang (260) konfiguriert ist, um die erste Energiespeichervorrichtung (142) in der ersten Position elektrisch zu isolieren, wobei der Luftstromvorhang (260) konfiguriert ist, einen Abluftstrom (290, 625) in der zweiten Position zu leiten, und wobei der Luftstromvorhang (260) konfiguriert ist, die zweite Energiespeichervorrichtung (142) in der dritten Position elektrisch zu isolieren.

4. Energiespeichersystem (140) nach Anspruch 3, wobei das bewegliche Element weiter umfasst:
ein Trägerelement, das konfiguriert ist, um den Luftstromvorhang (260) in der ersten Position, der zweiten Position und der dritten Position zu tragen.

5. Energiespeichersystem (140) nach Anspruch 4, wobei das Trägerelement eine Trägerstange (262) und mindestens einen Befestigungsring (264) umfasst, wobei der Befestigungsring (264) konfiguriert ist, um den Luftstromvorhang (260) an der Trägerstange (262) zu befestigen, wobei der Befestigungsring (264) entlang der Trägerstange (262) beweglich ist, um den Luftstromvorhang (260) zwischen der ersten Position, der zweiten Position und der dritten Position zu bewegen.

6. Energiespeichersystem (140) nach Anspruch 1, weiter umfassend:
einen sich verjüngenden Kanal (500), der konfiguriert ist, um einen Luftstrom an die eine oder die mehreren Energiespeichervorrichtung (142) bereitzustellen;
wobei der sich verjüngende Kanal (500) eine Öffnung (510) in Luftstromverbindung mit der Wärmetauschervorrichtung (230) definiert, wobei die Öffnung (510) konfiguriert ist, um einen gekühlten Luftstrom (280) von der Wärmetauschervorrichtung (230) aufzunehmen;
wobei der sich verjüngenden Kanal (500) weiter ein Abschlussende (520) definiert;
wobei der sich verjüngende Kanal (500) weiter eine Luftstromeinlassoberfläche (530) definiert;
wobei der sich verjüngenden Kanal (500) eine Querschnittsfläche definiert;
wobei der sich verjüngende Kanal (500) eine Luftstrompassage (540) umfasst, die sich in der Querschnittsfläche von der Öffnung (510) zum Abschlussende (520) hin verkleinert; und
eine Kühllufteinlassanordnung (550), die sich auf der Luftstromeinlassoberfläche (530) befindet, wobei die Kühllufteinlassanordnung (550) eine Vielzahl von Luftstromlöchern (560) umfasst, die konfiguriert sind, um einen Luftstrom zu der einen oder den mehreren Energiespeichervorrichtungen (142) zu leiten.

7. Energiespeichersystem (140) nach Anspruch 1, weiter umfassend:
einen oder mehrere Lüfter der Energiespeichervorrichtung, wobei jeder Lüfter der Energiespeichervorrichtung konfiguriert ist, um einen Luftstrom an mindestens eine Energiespeichervorrichtung (142) bereitzustellen.

8. Energiespeichersystem (140) nach Anspruch 7, wobei das bewegliche Element eine bewegliche Deckenvorrichtung (600) umfasst, die konfiguriert ist, um eine Strömungsrate von Luft in der definierten thermischen Zone (200) zu steuern.

9. Energiespeichersystem (140) nach Anspruch 8, wobei die bewegliche Deckenvorrichtung (600) weiter umfasst:
ein bewegliches Deckenelement (610), wobei das bewegliche Deckenelement (610) eine vertikale Richtung definiert, wobei das bewegliche Deckenelement (610) entlang der vertikalen Richtung beweglich ist;
ein strukturelles Deckenelement (620), wobei das strukturelle Deckenelement (620) ein feststehendes Element umfasst, das sich an einer Position oberhalb des beweglichen Deckenelements (610) befindet, wobei das strukturelle Deckenelement (620) und das bewegliche Deckenelement (610) zusammen einen Luftraum (630) in dem Raum zwischen dem strukturellen Deckenelement (620) und dem beweglichen Deckenelement (610) definieren; wobei das strukturelle Deckenelement (620) die Wärmetauschervorrichtung (230) trägt;
eine Passage für den Rückluftstrom (640), die konfiguriert ist, um einen Rückluftstrom (645) zu der Wärmetauschervorrichtung (230) zu leiten, wobei die Passage für den Rückluftstrom (640) innerhalb des Luftraums (630) angeordnet ist;
eine Passage für den gekühlten Luftstrom (650), die sich innerhalb des Luftraumes (630) befindet;
eine Passage für den gemischten Luftstrom (670), die sich innerhalb des Luftraumes (630) befindet; und
eine Passage für den Bypass-Luftstrom (660), die sich innerhalb des Luftraumes (630) befindet;
wobei die Passage für den gekühlten Luftstrom (650) konfiguriert ist, um einen gekühlten Luftstrom (655) von der Wärmetauschervorrichtung (230) zu der Passage für den gemischten Luftstrom (670) zu leiten;
wobei die Passage für den Bypass-Luftstrom (660) konfiguriert ist, um einen Bypass-Luftstrom (665) von der definierten thermischen Zone (200) zu der Passage für den gemischten Luftstrom (670) zu leiten; und
wobei die Passage für den gemischten Luftstrom (670) konfiguriert ist, um den gekühlten Luftstrom (655) und den Bypass-Luftstrom (665) zu einem gemischten Luftstrom zu (675) mischen, wobei die Passage für den gemischten Luftstrom (670) weiter konfiguriert ist, um den gemischten Luftstrom (675) an die definierte thermische Zone (200) bereitzustellen.

10. Energiespeichersystem (140) nach Anspruch 9, wobei das bewegliche Deckenelement (610) entlang der vertikalen Richtung beweglich ist, um das Volumen der definierten thermischen Zone (200) zu vergrößern oder zu verkleinern.

11. Energiespeichersystem (140) nach Anspruch 9, wobei das eine oder die mehreren Gebläse der Energiespeichervorrichtung konfiguriert sind, um einen größeren Luftstrom als den von der Wärmetauschervorrichtung (230) bereitgestellten gekühlten Luftstrom (655) zu bewegen, wobei ein Teil des Luftstroms von dem einen oder den mehreren Gebläsen der Energiespeichervorrichtung in die Passage für den Rückluftstrom (640) geleitet wird und wobei ein Teil des Luftstroms von dem einen oder den mehreren Gebläsen der Energiespeichervorrichtung in die Passage für den Bypass-Luftstrom (660) geleitet wird.

12. Energiespeichersystem (140) nach Anspruch 9, wobei das bewegliche Deckenelement (610) entlang der vertikalen Richtung zumindest teilweise auf der Grundlage des von dem einen oder den mehreren Gebläsen der Energiespeichervorrichtung bereitgestellten Luftstroms beweglich ist.

13. Verfahren (700) zum Bereitstellen eines Kühlluftstroms für ein Energiespeichersystem (140), wobei das Energiespeichersystem (140) eine oder mehrere Energiespeichervorrichtungen (142) und ein thermisches Steuersystem (220) umfasst, das konfiguriert ist, um einen Kühlluftstrom zu der einen oder den mehreren Energiespeichervorrichtungen (142) bereitzustellen, wobei das thermische Steuersystem (200) eine Wärmetauschervorrichtung (230), die konfiguriert ist, um einen Kühlluftstrom bereitzustellen, und ein bewegliches Element umfasst, das konfiguriert ist, um eine Verteilung des Luftstroms einzustellen, wobei das Verfahren (700) umfasst:
(bei 702) Positionieren der einen oder der mehreren Energiespeichervorrichtungen (142) innerhalb einer definierten thermischen Zone (200);
(bei 704) Bereitstellen eines gekühlten Luftstroms (280, 655) an die definierte thermische Zone (200) durch die eine oder die mehreren Wärmetauschervorrichtungen (230); und
Einstellen einer Verteilung des Luftstroms innerhalb der definierten thermischen Zone (200) durch das bewegliche Element; wobei
das bewegliche Element einen Luftstromvorhang (260) umfasst, der konfiguriert ist, um einen Abluftstrom (290, 625) von der einen oder den mehreren Energiespeichervorrichtungen (142) wegzuleiten, wobei der Abluftstrom (290, 625) einen Luftstrom umfasst, der an die eine oder die mehreren Energiespeichervorrichtungen (142) Kühlung bereitgestellt hat; und
der Luftstromvorhang (260) ein flexibles, elektrisch isolierendes Material umfasst.

## Revendications

1. Système de stockage d'énergie (140), comprenant :
un ou plusieurs dispositifs de stockage d'énergie (142) positionnés à l'intérieur d'une zone thermique définie (200) ; et
un système de commande thermique (220) conçu pour fournir un flux d'air de refroidissement aux un ou plusieurs dispositifs de stockage d'énergie (142), le système de commande thermique (220) comprenant :
un dispositif d'échange de chaleur (230) conçu pour fournir un flux d'air refroidi (280) à la zone thermique définie (200), et
un élément mobile conçu pour ajuster une distribution de flux d'air à l'intérieur de la zone thermique définie (200), dans lequel
l'élément mobile comprend un rideau de flux d'air (260) conçu pour diriger un flux d'air d'échappement (290, 625) à l'opposé des un ou plusieurs dispositifs de stockage d'énergie (142), dans lequel le flux d'air d'échappement (290, 625) comprend un flux d'air qui a fourni un refroidissement aux un ou plusieurs dispositifs de stockage d'énergie (142) ; et
le rideau de flux d'air (260) comprend un matériau électro-isolant souple.

2. Système de stockage d'énergie (140) selon la revendication 1, dans lequel les un ou plusieurs dispositifs de stockage d'énergie (142) comprennent au moins un premier dispositif de stockage d'énergie (142) et un second dispositif de stockage d'énergie (142), dans lequel le premier dispositif de stockage d'énergie (142) est positionné à un premier emplacement dans la zone thermique définie (200), dans lequel le second dispositif de stockage d'énergie (142) est positionné à un second emplacement dans la zone thermique définie (200), dans lequel le rideau de flux d'air (260) est positionné entre le premier dispositif de stockage d'énergie (142) et le second dispositif de stockage d'énergie (142).

3. Système de stockage d'énergie (140) selon la revendication 2, dans lequel le rideau de flux d'air (260) est mobile entre au moins une première position, une deuxième position et une troisième position, dans lequel le rideau de flux d'air (260) est conçu pour isoler électriquement le premier dispositif de stockage d'énergie (142) dans la première position, dans lequel le rideau de flux d'air (260) est conçu pour diriger un flux d'air d'échappement (290, 625) dans la deuxième position, et dans lequel le rideau de flux d'air (260) est conçu pour isoler électriquement le second dispositif de stockage d'énergie (142) dans la troisième position.

4. Système de stockage d'énergie (140) selon la revendication 3, dans lequel l'élément mobile comprend en outre :
un élément de support conçu pour supporter le rideau de flux d'air (260) dans la première position, la deuxième position et la troisième position.

5. Système de stockage d'énergie (140) selon la revendication 4, dans lequel l'élément de support comprend une barre de support (262) et au moins un anneau de fixation (264), dans lequel l'anneau de fixation (264) est conçu pour attacher le rideau de flux d'air (260) à la barre de support (262), dans lequel l'anneau de fixation (264) est mobile le long de la barre de support (262) pour déplacer le rideau de flux d'air (260) entre la première position, la deuxième position et la troisième position.

6. Système de stockage d'énergie (140) selon la revendication 1, comprenant en outre :
un conduit effilé (500) conçu pour fournir un flux d'air aux un ou plusieurs dispositifs de stockage d'énergie (142) ;
le conduit effilé (500) définissant une ouverture (510) en communication de flux d'air avec le dispositif d'échange de chaleur (230), l'ouverture (510) étant conçue pour recevoir un flux d'air refroidi (280) du dispositif d'échange de chaleur (230),
le conduit effilé (500) définissant en outre une extrémité terminale (520) ;
le conduit effilé (500) définissant en outre une surface d'entrée de flux d'air (530) ;
le conduit effilé (500) définissant une section transversale ;
le conduit effilé (500) comprenant un passage de flux d'air (540) diminuant en section transversale de l'ouverture (510) à l'extrémité terminale (520) ; et
un réseau d'entrée d'air de refroidissement (550) situé sur la surface d'entrée de flux d'air (530), le réseau d'entrée d'air de refroidissement (550) comprenant une pluralité de trous de flux d'air (560) conçus pour diriger un flux d'air vers les un ou plusieurs dispositifs de stockage d'énergie (142).

7. Système de stockage d'énergie (140) selon la revendication 1, comprenant en outre :
un ou plusieurs ventilateurs de dispositif de stockage d'énergie, dans lequel chaque ventilateur de dispositif de stockage d'énergie est conçu pour fournir un flux d'air à au moins un dispositif de stockage d'énergie (142).

8. Système de stockage d'énergie (140) selon la revendication 7, dans lequel l'élément mobile comprend un dispositif de plafond mobile (600) conçu pour commander un débit d'air dans la zone thermique définie (200).

9. Système de stockage d'énergie (140) selon la revendication 8, dans lequel le dispositif de plafond mobile (600) comprend :
un élément de plafond mobile (610), l'élément de plafond mobile (610) définissant une direction verticale, dans lequel l'élément de plafond mobile (610) est mobile le long de la direction verticale ;
un élément de plafond structurel (620), l'élément de plafond structurel (620) comprenant un élément fixe situé à une position au-dessus de l'élément de plafond mobile (610), l'élément de plafond structurel (620) et l'élément de plafond mobile (610) définissant ensemble un plénum (630) dans l'espace entre l'élément de plafond structurel (620) et l'élément de plafond mobile (610) ; dans lequel l'élément de plafond structurel (620) supporte le dispositif d'échange de chaleur (230) ;
un passage de flux d'air de retour (640) conçu pour diriger un flux d'air de retour (645) vers le dispositif d'échange de chaleur (230), le passage de flux d'air de retour (640) étant situé à l'intérieur du plénum (630) ;
un passage de flux d'air refroidi (650) situé à l'intérieur du plénum (630) ;
un passage de flux d'air mixte (670) situé à l'intérieur du plénum (630) ; et
un passage de flux d'air de dérivation (660) situé à l'intérieur du plénum (630) ;
dans lequel le passage de flux d'air refroidi (650) est conçu pour diriger un flux d'air refroidi (655) du dispositif d'échange de chaleur (230) vers le passage de flux d'air mixte (670) ;
dans lequel le passage de flux d'air de dérivation (660) est conçu pour diriger un flux d'air de dérivation (665) de la zone thermique définie (200) vers le passage de flux d'air mixte (670) ; et
dans lequel le passage de flux d'air mixte (670) est conçu pour mélanger le flux d'air refroidi (655) et le flux d'air de dérivation (665) en un flux d'air mixte (675), dans lequel le passage de flux d'air mixte (670) est en outre conçu pour fournir le flux d'air mixte (675) à la zone thermique définie (200).

10. Système de stockage d'énergie (140) selon la revendication 9, dans lequel l'élément de plafond mobile (610) est mobile le long de la direction verticale pour augmenter ou réduire le volume de la zone thermique définie (200).

11. Système de stockage d'énergie (140) selon la revendication 9, dans lequel les un ou plusieurs ventilateurs de stockage d'énergie sont conçus pour déplacer un flux d'air plus important que le flux d'air refroidi (655) fourni par le dispositif d'échange de chaleur (230), dans lequel une partie du flux d'air provenant des un ou plusieurs ventilateurs de dispositif de stockage d'énergie est dirigée dans le passage de flux d'air de retour (640), et
dans lequel une partie du flux d'air provenant des un ou plusieurs ventilateurs de dispositif de stockage d'énergie est dirigée dans le passage de flux d'air de dérivation (660).

12. Système de stockage d'énergie (140) selon la revendication 9, dans lequel l'élément de plafond mobile (610) est mobile le long de la direction verticale sur la base au moins en partie de la quantité de flux d'air fournie par les un ou plusieurs ventilateurs de dispositif de stockage d'énergie.

13. Procédé (700) de fourniture d'un flux d'air de refroidissement pour un système de stockage d'énergie (140), le système de stockage d'énergie (140) comprenant un ou plusieurs dispositifs de stockage d'énergie (142) et un système de commande thermique (220) conçu pour fournir un flux d'air de refroidissement aux un ou plusieurs dispositifs de stockage d'énergie (142), le système de commande thermique (200) comprenant un dispositif d'échange de chaleur (230) conçu pour fournir un flux d'air de refroidissement et un élément mobile conçu pour ajuster une distribution de flux d'air, le procédé (700) comprenant :
(en 702) le positionnement des un ou plusieurs dispositifs de stockage d'énergie (142) à l'intérieur d'une zone thermique définie (200) ;
(en 704) la fourniture d'un flux d'air refroidi (280, 655) à la zone thermique définie (200) par les un ou plusieurs dispositifs d'échange de chaleur (230) ; et
l'ajustement d'une distribution de flux d'air à l'intérieur de la zone thermique définie (200) par l'élément mobile, dans lequel
l'élément mobile comprend un rideau de flux d'air (260) conçu pour diriger un flux d'air d'échappement (290, 625) à l'opposé des un ou plusieurs dispositifs de stockage d'énergie (142), dans lequel le flux d'air d'échappement (290, 625) comprend un flux d'air qui a fourni un refroidissement aux un ou plusieurs dispositifs de stockage d'énergie (142) ; et
le rideau de flux d'air (260) comprend un matériau électro-isolant souple.
